# EUROPEAN PATENT APPLICATION

(11) **EP 4 603 786 A1**
(43) Date of publication of application: **20.08.2025**
(21) Application number: 23916453.6
(22) Date of filing: 26.12.2023
(51) Int. Cl.: G01B 5/00, G01B 5/02, G01B 3/24, H01M 10/48

(54) **MEASURING JIG FOR BATTERY MODULE**

(30) Priority: 10.01.2023 KR 20230003718
(71) Applicant: LG Energy Solution, Ltd., Seoul 07335 (KR)
(72) Inventor: NA, Yoonseok, Daejeon 34122 (KR)
(74) Representative: Plasseraud IP
(86) International application number: PCT/KR2023/021592
(87) International publication number: WO 2024/150970

(57) **Abstract**

A measuring jig for a battery module that includes a support for disposing across the battery module, a plurality of fastening parts for fastening with a measuring instrument, and fixing plates for connecting to the support and to support the measuring jig on the battery module.

## Description

### [Technical Field]

### CROSS-REFERENCE TO RELATED APPLICATION

This application claims priority to and the benefit of Korean Patent Application No. 10-2023-0003718 filed in the Korean Intellectual Property Office on January 10, 2023, the entire contents of which are incorporated herein by reference.

The present disclosure relates to a measuring jig, and more particularly, to a jig for measuring a sample of a battery module.

### [Background Art]

Generally, secondary batteries may be classified into a can-type secondary battery in which an electrode assembly is built into a metal can and a pouch-type secondary battery in which the electrode assembly is built in a pouch of an aluminum laminate sheet, depending on a shape of an exterior material.

In the case of the secondary batteries used in small devices, 2 and 3 battery cells are arranged, but in the case of secondary batteries used in medium to large devices such as automobiles, a battery module in which a plurality of battery cells are electrically connected is provided to the required device.

The battery modules undergo characteristic tests to verify their lifespan before being shipped.

For example, the change in the overall width of the battery module is measured as a way to check the degree of deterioration and increase in resistance at each specific cycle.

However, up to now, the situation is that workers are manually measuring the full width of each measurement point using a measuring instrument (e.g., vernier caliper). In this case, since it takes a lot of work time and there is no means to maintain flatness for the measuring instrument, there is a high probability that measurement results will be inaccurate due to non-uniformity in the flatness.

When the hand tremors of workers handling the measuring instruments occur, the reliability of the measurement results becomes even lower.

### [Disclosure]

### [Technical Problem]

The present disclosure attempts to improve reliability of measurement of a battery module.

However, problems to be solved by exemplary aspects of the present disclosure are not limited to the abovementioned problems, and can be variously expanded within the scope of the technical idea included in the present disclosure.

### [Technical Solution]

According to an aspect, a measuring jig for a battery module includes: a support that is disposed across the battery module and has a plurality of fastening parts for fastening with a measuring instrument; and a fixing plate that is connected to the support and supported on the battery module.

The fastening part may include a groove extending along a width direction of the support.

The groove may be arranged in plural at preset intervals along a longitudinal direction of the support.

Widths of each of the plurality of grooves may be the same.

Fixing plates may be slidably connected to both ends of the support, and the fixing plate may be provided with a contact member for closely contacting the fixing plate to the battery module.

The fixing plate may be in close contact with an end plate of the battery module.

The fixing plate may have a square shape, and the contact member may be disposed to face the fixing plate with the support therebetween.

The contact member may be fixed to the fixing plate and include a bracket screwed to the end plate.

The measuring instrument may measure a full width of the battery module.

The measuring instrument may be a vernier caliper.

### [Advantageous Effects]

According to an aspect of the present disclosure, when measuring characteristics of a battery module, the characteristics of the battery module can be measured without shaking due to hand tremors due to a worker's manual work, it is possible to improve the reliability of measurement. In addition, it is possible to improve work productivity by shortening the measurement time.

Effects of the present disclosure are not limited to the above-described effects. That is, other effects that are not described may be obviously understood by those skilled in the art from the following specification.

### [Description of the Drawings]

FIG. 1 is a perspective view illustrating a measuring jig for a battery module according to an aspect of the present disclosure.
FIG. 2 is a perspective view illustrating a state in which the measuring jig for a battery module according to the aspect of the present disclosure is installed on the battery module.
FIG. 3 is a front view illustrating a state in which the measuring jig for a battery module according to the aspect of the present disclosure is installed on the battery module.

### [Mode for Invention]

Hereinafter, exemplary aspects of the present disclosure will be described in detail with reference to the accompanying drawings so that those skilled in the art to which the present disclosure pertains may easily practice the present disclosure. However, the present disclosure may be implemented in various different forms and is not limited to exemplary aspects provided herein.

Portions unrelated to the description will be omitted in order to obviously describe the present disclosure, and same or similar components will be denoted by the same reference numerals throughout the present specification.

In addition, the size and thickness of each component illustrated in the drawings are arbitrarily indicated for convenience of description, and the present disclosure is not necessarily limited to the illustrated those. In the drawings, the thickness of layers, films, panels, regions, etc., are exaggerated for clarity. In addition, in the accompanying drawings, thicknesses of some of layers and regions have been exaggerated for convenience of explanation.

In addition, it will be understood that when an element such as a layer, film, region, or substrate is referred to as being "on" another element, it can be directly on the other element or intervening elements may also be present. In contrast, when an element is referred to as being "directly on" another element, there are no intervening elements present. In addition, when an element is referred to as being "on" a reference element, it can be positioned on or beneath the reference element, and is not necessarily positioned on the reference element in an opposite direction to gravity.

In addition, unless explicitly described to the contrary, the word "comprise", and variations such as "comprises" or "comprising", will be understood to imply the inclusion of stated elements but not the exclusion of any other elements.

Further, throughout the specification, the word "plan view" refers to a view when a target is viewed from the top, and the word "cross-sectional view" refers to a view when a cross section of a target taken along a vertical direction is viewed from the side.

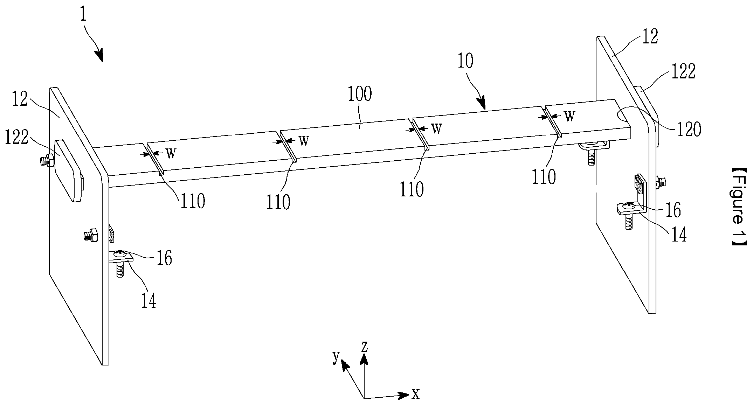

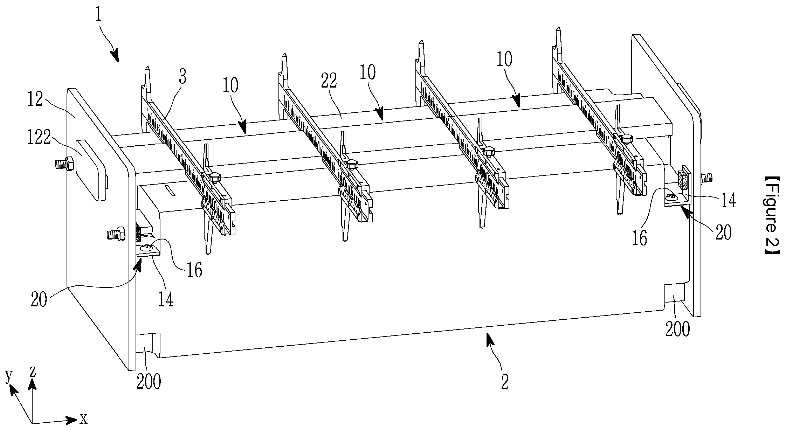

FIG. 1 is a perspective view illustrating a measuring jig for a battery module (hereinafter referred to as a measuring jig for convenience) according to an aspect of the present disclosure. FIG. 2 is a perspective view of the measuring jig according to the aspect of the present disclosure installed in the battery module.

The measuring jig according to the aspect is configured to measure characteristics of the battery module, such as a full width.

As illustrated in FIG. 1, a measuring jig 1 includes a support 10 and fixing plates 12 connected to both ends of the support 10.

As can be seen from FIG. 2, the support 10 is disposed across the battery module 2 along a longitudinal direction x of the battery module 2 when measuring the full width of the battery module 2. For this purpose, the support 10 has a body 100 in a shape of a long plate material.

A square-shaped fixing plate 12 is slidably connected to the support 10. To this end, a through hole 120 through which the support 10 may penetrate is formed in each of the fixing plates 12, and stoppers 122 having a size larger than the through hole 120 are disposed at both ends of the support 10. Accordingly, the fixing plate 12 can slide on the support 10, but does not separate from the support 10.

As can be seen from FIG. 2, when measuring the battery module 2, both fixing plates 12 may be supported in close contact with the battery module 2, for example, in close contact with the end plate 20 of the battery module 2.

In this aspect, both of the two fixing plates 12 are slidably coupled to the support 10, or one fixing plate is fixed to the support and only the other fixing plate can be slidably coupled to the support. A structure in which both fixing plates are fixed to the support is also possible.

In this aspect, the battery module 2 may be manufactured by receiving a battery cell stack (not illustrated) in the module frame 22 and then bonding the end plate 20 to an open portion of the module frame 22. Of course, the configuration of the battery module is not limited to the above configuration. Any structure is possible as long as the battery module has a full width and/or full length.

The body 100 of the support 10 is provided with a plurality of fastening parts to which a measuring instrument may be fastened. In this aspect, the measuring instrument is provided as a vernier caliper 3, and the fastening part is composed of a groove 110 extending to the body 100 along a width direction y of the support 10.

A plurality of grooves 110 may be arranged on the body 100 with a preset interval therebetween. In this aspect, four grooves 110 are provided on the body 100. Of course, the number of grooves 110 is not necessarily limited thereto. The position of the groove 110 on the body 100 may be set in consideration of the measurement point when actually measuring the battery module 2 using the measuring jig 1.

In this aspect, each width w of the plurality of grooves 110 is the same, but this is not necessarily limited thereto. Each width w may be entirely different or may be partially identical.

Meanwhile, both fixing plates 12 are provided with contact members for fixing the fixing plates 12 in close contact with the battery module 2 when actually measuring the battery module 2 by the measuring jig 1. In this aspect, the contact member is provided so that the fixing plate 12 may be in contact with and fixed to the end plate 20.

In this aspect, the contact member may be fixed to an inner side surface of the fixing plate 12, for example, by screwing, and may be composed of a bracket 14 screwed to the fixing part 200 of the end plate 20. The bracket 14 may be disposed to face the fixing plate 12 with the support 10 interposed therebetween. This contact member is only an example, and any configuration may be used as long as the fixing plate 12 may be in close contact with and fixed to the battery module 2, for example, the end plate 20.

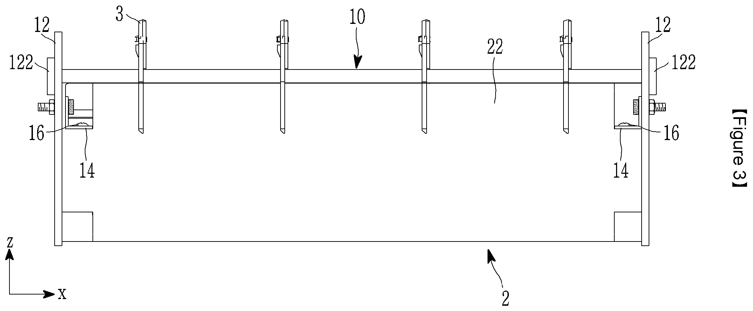

Referring to FIG. 3, when measuring the characteristics (e.g., full width) of the battery module 2 using the measuring jig 1 according to the aspect, each of the two fixing plates 12 is slid so that an opening formed in the bracket 14 and a threaded hole formed in the fixing part 200 of the end plate 20 are aligned, and thus, is in close contact with the end plate 20. In this state, the fixing plate 12 may be fixed to the end plate 20 by screwing the bolt 16 into the screw hole of the fixing part 200 of the end plate 20 through the opening of the bracket 14.

In this state, the full width of the battery module 2 may be measured using the vernier caliper 3, which is the measuring instrument fastened to each of the plurality of grooves 110 of the support 10, and since the measurement jig 1 is fastened to the battery module 2 in a stable and sturdy state, the full-width measurement of the battery module 2 may be achieved stably while preventing the worker's hand tremors. Above all, the full widths of multiple parts of the battery module 2 may be measured simultaneously, and the exact part may be measured every time even if the battery module being measured is changed. Accordingly, it is possible to improve the reliability of measurement.

Although the exemplary aspect of the present disclosure has been described in detail hereinabove, the scope of the present disclosure is not limited thereto. That is, several modifications and alterations made by a person of ordinary skill in the art using a basic concept of the present disclosure as defined in the claims fall within the scope of the present disclosure.

### [Description of Reference Signs]

1: Measuring jig
2: Battery module
10: Support
12: Fixing plate
14: Bracket
16: Bolt
100: Body
110: Groove

## Claims

1. A measuring jig for a battery module, comprising:
a support that is configured to be disposed across a battery module and has a plurality of fastening parts configured for fastening with a measuring instrument; and
a fixing plate that is configured to be connected to the support and supported on the battery module.

2. The measuring jig of claim 1, wherein:
a fastening part of the plurality of fastening parts includes a groove extending along a width direction of the support.

3. The measuring jig of claim 2, wherein:
the plurality of fastening parts includes a plurality of grooves at preset intervals along a longitudinal direction of the support.

4. The measuring jig of claim 3, wherein:
widths of each of the plurality of grooves are the same.

5. The measuring jig of claim 1, wherein:
fixing plates are slidably connected to both ends of the support, and at least one of the fixing plates is provided with a contact member configured for closely contacting the fixing plate to the battery module.

6. The measuring jig of claim 5, wherein:
the at least one fixing plate is configured to be in close contact with an end plate of the battery module.

7. The measuring jig of claim 5, wherein:
the fixing plates have a square shape, and the contact member is disposed to face the fixing plate.

8. The measuring jig of claim 5, wherein:
the contact member is fixed to the fixing plate and includes a bracket screwed to the end plate.

9. The measuring jig of claim 1, wherein:
the measuring jig is configured so that the measuring instrument measures a full width of the battery module.

10. The measuring jig of claim 1, wherein:
the fastening part is configured to fasten to a vernier caliper as the measuring instrument.
